# FASCICULE DE BREVET EUROPEEN

(11) **EP 2 865 933 B1**
(45) Date de publication et mention de la délivrance du brevet: **22.08.2018**
(21) Numéro de dépôt: 14186710.1
(22) Date de dépôt: 26.09.2014
(51) Int. Cl.: F16L 57/04, F16L 59/14, F16L 5/04, H02G 3/04, A62C 2/06, A62C 3/16

(54) **Procédé de pose d'une garniture de protection thermique**
Einbauverfahren einer Wärmeschutzdichtung
Method for installing a thermal protection liner

(30) Priorité: 25.10.2013 FR 1360445
(43) Date de publication de la demande: 29.04.2015
(73) Titulaire: Soletanche Freyssinet, 92500 Rueil Malmaison (FR)
(72) Inventeur: Decroix, Michel, 50100 Cherbourg Octeville (FR); Berrini, Simon, 38510 Saint-Victor-de-Morestel (FR)
(74) Mandataire: Cabinet Plasseraud

(56) Documents cités:
- EP-A2- 1 449 764
- WO-A1-2012/131179
- FR-A1- 2 701 850
- GB-A- 2 495 234
- JP-A- 2007 126 188
- JP-A- 2008 245 710
- US-A- 5 079 292
- US-A1- 2013 095 275

## Description

La présente invention est relative à la protection thermique des installations industrielles. L'industrie nucléaire est un type d'industrie particulièrement concernée, mais ce n'est pas la seule.

Le procédé selon l'invention concerne la protection thermique autour d'organes conducteurs de la chaleur, par exemple des tuyaux métalliques, s'étendant dans des espaces contigus séparés par une ou plusieurs parois. Il peut se produire une élévation anormale de température dans l'un de ces espaces, provoquée par exemple par un incendie.

Le but de la protection thermique dont il est question ici est de limiter la propagation de l'élévation de température dans un espace contigu séparé par une paroi, alors même qu'un ou plusieurs organes conducteurs de chaleur, par exemple des tuyaux métalliques traversent cette paroi.

Les exigences de sécurité pour prendre en compte ce type de risque sont typiquement qu'en cas d'élévation de température jusqu'à une valeur donnée (représentative par exemple d'un scénario d'incendie) dans le premier espace, la température reste inférieure à un seuil déterminé dans le second espace au bout d'un temps déterminé, ou encore que la température de la partie accessible dans le second espace de l'élément conducteur reste inférieure à un seuil déterminé au bout d'un temps déterminé.

Traditionnellement, on prend en compte une exigence de ce type en disposant autour de chaque organe conducteur une couverture thermiquement isolante. Celle-ci doit être relativement longue pour réduire la surface de tuyau rayonnant de la chaleur. Il en résulte un encombrement significatif de la garniture isolante. En outre, l'isolation thermique du tuyau, en limitant la propagation radiale de la chaleur, favorise sa propagation le long du tuyau. La protection thermique offerte est donc médiocre, la zone chaude radiante du tuyau étant simplement repoussée un peu plus loin de la cloison.

US 5 079 292 décrit un pare-feu protégeant des câbles électriques vis-à-vis des émissions de chaleur dues à un incendie dans le local où se trouvent ces câbles. Le pare-feu enveloppe totalement les câbles et comprend plusieurs couches cousues ensemble.

EP 1 449 764 décrit un revêtement d'isolation passive destiné à recouvrir l'intérieur des parois d'un avion.

US 2013/095275 décrit un procédé de pose d'un revêtement de protection thermique sur un tuyau traversant une paroi.

La présente invention vise à traiter ces exigences de sécurité de manière plus satisfaisante.

À cet effet, l'invention propose un procédé de pose d'une garniture de protection thermique tel que défini dans la revendication 1.

Cette solution permet l'absorption d'une partie de la chaleur provenant de l'organe conducteur de chaleur. On ne compte plus seulement sur un élément isolant pour contrarier la propagation de la chaleur ; on fait en sorte qu'une partie de cette chaleur soit dissipée dans la garniture par la vaporisation de l'eau dégagée par la colle en cas d'élévation anormale de température. La garniture de protection thermique peut être de conception simple et d'encombrement réduit.

Un avantage significatif du procédé est que la longueur de l'organe conducteur qui a besoin d'être recouverte de la garniture à la sortie de la paroi peut être réduite, en tous cas beaucoup plus faible que si la garniture était simplement isolante, à un niveau de protection comparable. L'épaisseur de la garniture peut aussi être limitée. Le gain de place est très appréciable dans des environnements confinés.

Dans un mode de réalisation, les première et deuxième faces de la garniture de protection thermique forment une poche. L'isolant thermique peut alors être logé dans cette poche. La structure de la garniture de protection thermique est organisée pouvoir être préfabriquée, permettant ainsi aux opérateurs d'effectuer sa pause plus facilement et plus rapidement sur l'organe conducteur de chaleur.

La deuxième face comprend avantageusement une première portion formant, avec la première face, la poche et une deuxième portion pouvant former un rabat. Le procédé peut alors comporter, au cours de l'étape d'assemblage, le collage du rabat sur une partie de la première portion de la deuxième face.

Selon une réalisation, la garniture de protection thermique est de forme sensiblement plane avant son assemblage, facilitant ainsi son conditionnement et son transport.

Dans une réalisation avantageuse, le procédé comporte, au cours de l'étape d'assemblage, l'application de la colle sur l'ensemble de la première face perméable de la garniture de protection thermique. De la colle peut aussi être appliquée sur une portion de l'organe conducteur de chaleur au cours de l'étape d'assemblage.

Dans une réalisation, la première face de la garniture de protection thermique comprend du tissu alvéolé. Ce tissu permet un encollage uniforme et la diffusion de la colle et/ou de l'eau qu'elle dégage vers l'isolant.

Pour améliorer l'isolation de l'organe conducteur de chaleur, un joint isolant peut être réalisé entre l'organe conducteur de chaleur et la garniture de protection thermique et/ou entre la paroi et ladite garniture de protection thermique.

D'autres caractéristiques et avantages de l'invention apparaîtront au cours de la description suivante d'une de ses formes de réalisation, donnée à titre d'exemple non limitatif, en regard des dessins joints, dans lesquels :
- la figure 1 est une vue en coupe d'un schéma montrant une garniture de protection thermique assemblée sur un tuyau conducteur de chaleur ;
- la figure 2 est une vue en perspective de la garniture en place sur le tuyau ; et
- la figure 3 est une vue en perspective de la garniture de protection thermique avant son assemblage sur l'organe conducteur de chaleur.

Sur les différentes figures, les mêmes références désignent des éléments identiques ou similaires.

Lors d'une élévation anormale de température dans un premier espace 3, le rôle de la protection thermique proposée ici est de limiter, ou de retarder, la propagation de l'élévation de température dans un espace 4 contigu séparé par une paroi 2, alors même qu'un ou plusieurs organes conducteurs de chaleur 1, par exemple des tuyaux métalliques, traversent cette paroi 2.

Conformément à l'invention, une garniture de protection thermique 5 est assemblée sur chacun des organes conducteurs de chaleur 1, afin d'isoler et d'absorber une partie de la chaleur provenant de cet organe 1.

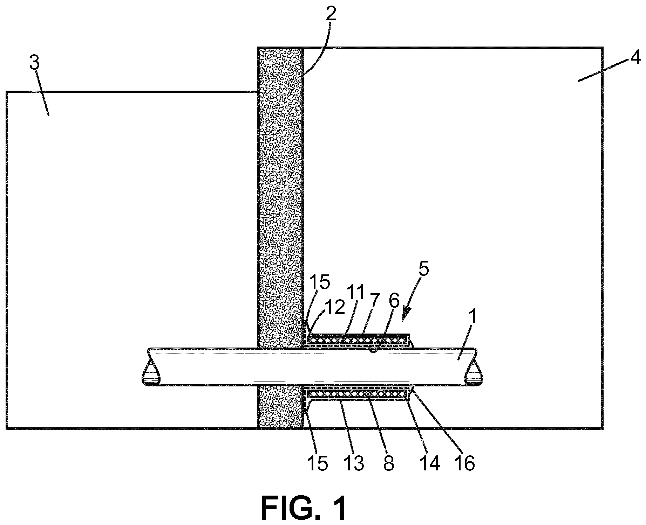

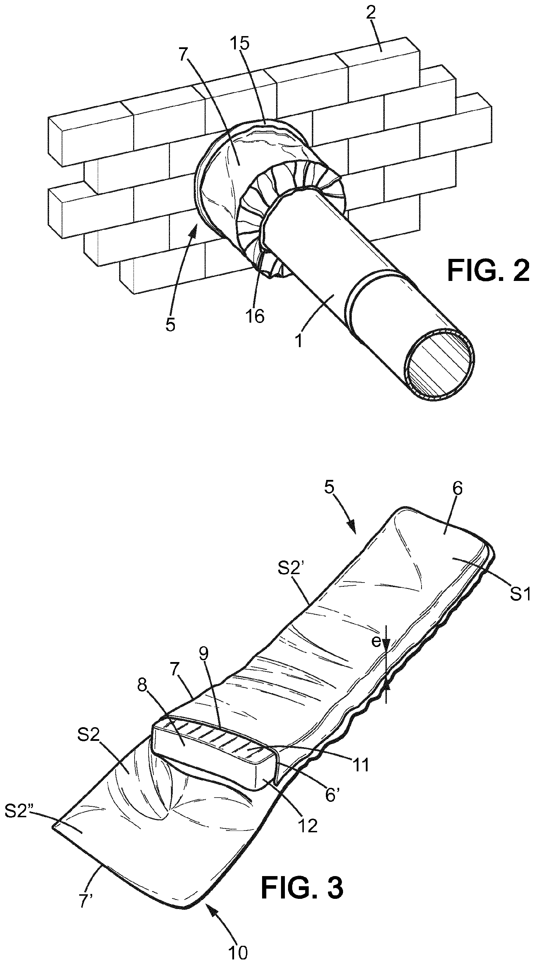

L'organe conducteur de chaleur 1 est, dans l'exemple non limitatif illustré sur les figures 1 et 2, un tuyau métallique de section annulaire.

La figure 1 présente la garniture 5 assemblée sur une portion de l'organe conducteur de chaleur 1 reliant les espaces 3 et 4. La garniture 5 est en contact avec la paroi 2. La paroi 2 peut être une cloison, un plancher, un plafond ou toute autre paroi séparant deux espaces distincts.

La garniture 5, représentée en perspective sur la figure 3 avant son assemblage sur une portion du tuyau 1, comprend une première face 6, une deuxième face 7 et un isolant thermique 8. La garniture 5 a, dans cet exemple, une forme générale de parallélépipède. Cette forme sensiblement plane avant assemblage lui permet d'être aisément stockée à plat.

La première face 6 est souple et perméable. Elle peut être avantageusement composée de tissu et plus particulièrement de tissu alvéolé. Elle présente une surface S1 de forme générale, par exemple, sensiblement rectangulaire.

La deuxième face 7 est souple et imperméable et est, par exemple composée d'une toile enduite. Elle présente une surface S2 plus grande que S1 et de forme générale rectangulaire. Les première et deuxième faces 6 et 7 sont situées à l'opposé l'une de l'autre.

L'isolant thermique 8 se situe entre les première et deuxième faces 6 et 7. Il est adapté pour permettre une bonne isolation thermique en réduisant les fuites radiales de chaleur à partir du tuyau 1. L'isolant 8 est, par exemple, composé de laine minérale, d'ouate de cellulose ou en tout autre matériau ayant une faible conductivité thermique. Il présente, par exemple, une forme générale de parallélépipède rectangle d'épaisseur e.

La première face 6 et la deuxième face 7 de la garniture 5 sont solidarisées l'une de l'autre, par exemple par couture d'au moins une partie des bords de la première face 6 sur la deuxième face 7 ou inversement. Alternativement, au moins l'un des bords 6' et 7' des première et deuxième faces 6 et 7 est libre. Les première et deuxième faces 6 et 7 forment ainsi une poche 9 dans laquelle l'isolant 8 est glissé. En outre, la surface S2 comprend une portion souple qui ne fait pas face à la surface S1 et qui se replie pour former un rabat 10. Le rabat 10 est adapté pour améliorer le maintien de la garniture 5 autour du tuyau 1.

Dans l'exemple présenté, la surface S2 se décompose entre une première portion S2' et une deuxième portion S2". La première portion S2' forme, avec la surface S1, la poche 9 logeant l'isolant 8. La deuxième portion S2" forme le rabat 10.

Après insertion de l'isolant 8 dans la poche 9, l'isolant 8 est recouvert sur une première face 11 et sur un premier chant 12 par la première face 6 perméable. La face 11 et le chant 12 sont destinés à être orientés vers l'intérieur, c'est-à-dire respectivement vers le tuyau 1 et vers la paroi 2. En outre, l'isolant 8 est recouvert sur une deuxième face 13 et sur un deuxième chant 14 par la deuxième face 7 imperméable, la face 13 et le chant 14 étant destinés à être orientés vers l'extérieur.

La garniture 5 peut être préfabriquée à l'avance en usine et être adaptée aux dimensions du tuyau à équiper 1.

La garniture 5 est solidarisée à la paroi 2 et à une portion du tuyau 1 par collage.

Le collage est réalisé à l'aide d'une colle comprenant des éléments actifs capables de libérer de l'eau lors d'une élévation de température. Il en résulte un processus endothermique lorsque la température s'élève. A la température ambiante, l'eau demeure liée par les éléments actifs de la colle. Sous l'action d'une élévation de température, l'eau est libérée, à environ 80 °C, par exemple. La température atteignant 100 °C, l'eau libérée est vaporisée, absorbant ainsi une partie de la chaleur provenant de l'espace 3.

Une colle réfractaire du genre décrit dans le brevet français n° 2 701 850 convient bien à cette application, sans que ceci soit limitatif.

Pour réaliser l'assemblage de la garniture 5 sur une partie du tuyau 1, l'opérateur étale, de préférence uniformément, de la colle sur l'ensemble de la première face 6. La composition de la première face 6, en tissu alvéolé, permet un encollage uniforme et facile à l'aide, par exemple, d'une spatule ou d'une brosse. En outre, la première face 6 permet de poser la colle sans endommager l'isolant 8 et permet à la colle de migrer dans l'isolant 8.

Il est également possible d'encoller la portion du tuyau 1 destinée à être couverte par la garniture 5.

Après encollage, l'opérateur enroule la garniture 5 en appliquant la première face 6 sur le tuyau 1.

La première face 6, perméable, est orientée vers l'intérieur de façon à permettre les échanges de chaleur entre le tuyau 1 et la garniture 5. La deuxième face 7, imperméable, est orientée vers l'extérieur de façon à assurer une bonne isolation du tuyau 1. L'imperméabilité de la deuxième face 7 permet en outre d'empêcher que l'eau libérée par la colle en cas d'élévation anormale de la température s'échappe avant d'avoir été vaporisée.

Une fois que la garniture 5 a été assemblée, l'opérateur ferme la garniture 5 autour du tuyau 1 en solidarisant le rabat 10 sur la garniture 5. Le rabat 10 est, par exemple, collé sur la deuxième face 7 avec une colle souple telle qu'une colle mastic à base de résine silicone. Le rabat 10 permet en outre de fermer la garniture 5 sans générer de déchets ou de poussières supplémentaires.

Avantageusement, l'opérateur réalise un premier joint étanche (non représenté) entre le tuyau 1 et la garniture 5 et un deuxième joint étanche 15 entre la paroi 2 et la garniture 5 de façon à améliorer l'isolation.

L'enchainement des étapes du procédé de pose de la garniture 5 décrites ci-avant permet d'obtenir un temps de pose réduit, par exemple de quatre à sept minutes et préférentiellement un temps de pause de cinq minutes.

Les modes de réalisation décrits ci-dessus sont des illustrations de la présente invention. Diverses modifications peuvent leur être apportées sans sortir du cadre de l'invention qui ressort des revendications annexées. En particulier, le procédé est applicable des organes conducteur de chaleur autres que des tuyaux.

## Revendications

1. Procédé de pose d'une garniture de protection thermique sur un organe conducteur de chaleur (1) traversant une paroi (2) séparant deux espaces contigus, le procédé comprenant :
- recevoir la garniture de protection thermique (5) comprenant une première face (6) perméable à l'eau liquide, une deuxième face (7) imperméable à l'eau liquide à l'opposé de la première face et un isolant thermique (8) entre les première et deuxième faces;
- assembler la garniture de protection thermique sur l'organe conducteur de chaleur contre la paroi du côté de l'un des deux espaces contigus, de façon que la garniture de protection thermique entoure seulement une portion de l'organe conducteur de chaleur, ladite portion étant au contact de la paroi, avec la première face au contact de l'organe conducteur de chaleur, l'assemblage étant réalisé avec une colle comprenant des éléments actifs capables de libérer de l'eau lors d'une élévation de température, ladite colle étant appliquée entre la première face perméable de la garniture de protection thermique et l'organe conducteur de chaleur.

2. Procédé selon la revendication 1 dans lequel les première et deuxième faces (6, 7) de la garniture de protection thermique (5) forment une poche (9), et dans lequel l'isolant thermique (8) est logé dans ladite poche.

3. Procédé selon la revendication 2 dans lequel la deuxième face (7) comprend une première portion (S2') formant la poche (9) avec la première face (6) et une deuxième portion (S2") formant un rabat (10).

4. Procédé selon la revendication 3, comprenant en outre, au cours de l'étape d'assemblage :
- coller le rabat (10) sur une partie de la première portion (S2') de la deuxième face (7).

5. Procédé selon l'une quelconque des revendications 2 à 4, dans laquelle garniture de protection thermique avant assemblage est de forme sensiblement plane.

6. Procédé selon l'une quelconque des revendications précédentes, comprenant en outre, au cours de l'étape d'assemblage :
- appliquer une partie au moins de ladite colle sur l'ensemble de la première face perméable (6) de la garniture de protection thermique (5).

7. Procédé selon l'une quelconque des revendications précédentes, comprenant en outre, au cours de l'étape d'assemblage :
- appliquer une partie au moins de ladite colle sur une portion de l'organe conducteur de chaleur (1).

8. Procédé selon l'une quelconque des revendications précédentes dans lequel la première face (6) comprend du tissu alvéolé.

9. Procédé selon l'une quelconque des revendications précédentes, comprenant en outre :
- réaliser un joint isolant thermiquement (15) entre l'organe conducteur de chaleur (1) et la garniture de protection thermique (5) ;
- et/ou entre la paroi (2) et la garniture de protection thermique.

10. Procédé selon l'une quelconque des revendications précédentes, dans lequel une partie de ladite colle est contenue dans l'isolant (8).

## Patentansprüche

1. Verfahren zum Einbauen einer Wärmeschutzdichtung an einem Wärmeleitungselement (1), das eine Wand (2) durchquert, die zwei aneinander angrenzende Räume trennt, wobei das Verfahren aufweist:
- Empfangen der Wärmeschutzdichtung (5), die eine für flüssiges Wasser durchlässige erste Fläche (6), eine der ersten Fläche gegenüberliegende, für flüssiges Wasser undurchlässige zweite Fläche (7) und eine thermische Isolierung (8) zwischen der ersten und zweiten Fläche aufweist;
- Anbringen der Wärmeschutzdichtung an dem Wärmeleitungselement anstoßend an die Wandseite eines der zwei aneinander angrenzenden Räume derart, dass die Wärmeschutzdichtung nur einen Abschnitt des Wärmeleitungselements, der in Kontakt mit der Wand ist, umgibt und die erste Fläche in Kontakt mit dem Wärmeleitungselement ist, wobei das Anbringen mit einem Klebstoff erfolgt, der aktive Elemente aufweist, die fähig sind, bei einer Temperaturerhöhung Wasser freizusetzen, wobei der Klebstoff zwischen der durchlässigen ersten Fläche der Wärmeschutzdichtung und dem Wärmeleitungselement aufgetragen wird.

2. Verfahren nach Anspruch 1, in welchem die erste und zweite Fläche (6, 7) der Wärmeschutzdichtung (5) eine Tasche (9) bilden und in welchem die thermische Isolierung (8) in der Tasche angeordnet ist.

3. Verfahren nach Anspruch 2, in welchem die zweite Fläche (7) einen ersten Abschnitt (S2'), der mit der ersten Fläche (6) die Tasche (9) bildet, und einen zweiten Abschnitt (S2"), der eine Klappe (10) bildet, aufweist.

4. Verfahren nach Anspruch 3, ferner aufweisend im Verlaufe des Anbringungsschritts:
- Ankleben der Klappe (10) an einem Teil des ersten Abschnitts (S2') der zweiten Fläche (7).

5. Verfahren nach einem der Ansprüche 2 bis 4, in welchem die Wärmeschutzdichtung vor dem Anbringen eine im Wesentlichen flache Form hat.

6. Verfahren nach einem der vorstehenden Ansprüche, ferner aufweisend im Verlaufe des Anbringungsschritts:
- Auftragen mindestens eines Teils des Klebstoffs auf die gesamte erste durchlässige Fläche (6) der Wärmeschutzdichtung (5).

7. Verfahren nach einem der vorstehenden Ansprüche, ferner aufweisend im Verlaufe des Anbringungsschritts:
- Auftragen mindestens eines Teils des Klebstoffs auf einen Abschnitt des Wärmeleitungselements (1).

8. Verfahren nach einem der vorstehenden Ansprüche, in welchem die erste Fläche (6) einen Schaumstoff aufweist.

9. Verfahren nach einem der vorstehenden Ansprüche, ferner aufweisend:
- Herstellen einer thermisch isolierenden Verbindungsstelle (15) zwischen dem Wärmeleitungselement (1) und der Wärmeschutzdichtung (5);
- und/oder zwischen der Wand (2) und der Wärmeschutzdichtung.

10. Verfahren nach einem der vorstehenden Ansprüche, in welchem ein Teil des Klebstoffs in der Isolierung (8) enthalten ist.

## Claims

1. Method for installing a thermal protection lining on a heat conducting member (1) passing through a wall (2) that separates two contiguous spaces, the method comprising:
- receiving the thermal protection lining (5) comprising a first face (6) permeable to liquid water, a second face (7) impermeable to liquid water opposite the first face and a thermal insulator (8) between the first and second faces;
- assembling the thermal protection lining on the heat conducting member against the wall of the side of one of the two contiguous spaces, in such a way that the thermal protection lining surrounds only a portion of the heat conducting member, said portion being in contact with the wall, with the first face in contact with the heat conducting member, the assembly being carried out with an adhesive comprising active elements that can release water when the temperature rises, said adhesive being applied between the first permeable face of the thermal protection lining and the heat conducting member.

2. Method according to claim 1 wherein the first and second faces (6, 7) of the thermal protection lining (5) form a pocket (9), and wherein the thermal insulator (8) is housed in said pocket.

3. Method according to claim 2 wherein the second face (7) comprises a first portion (S2') forming a pocket (9) with the first face (6) and a second portion (S2") forming a flap (10).

4. Method according to claim 3, further comprising, during the step of assembly:
- gluing the flap (10) onto a portion of the first portion (S2') of the second face (7).

5. Method according to any of claims 2 to 4, wherein the thermal protection lining before assembly has a substantially flat shape.

6. Method as claimed in any preceding claim, further comprising, during the step of assembly:
- applying at least a portion of said adhesive over the entire first permeable face (6) of the thermal protection lining (5).

7. Method as claimed in any preceding claim, further comprising, during the step of assembly:
- applying at least a portion of said adhesive onto a portion of the heat conducting member (1).

8. Method as claimed in any preceding claim wherein the first face (6) comprises honeycomb fabric.

9. Method as claimed in any preceding claim, further comprising:
- carrying out a thermally insulating seal (15) between the heat conducting member (1) and the thermal protection lining (5);
- and/or between the wall (2) and the thermal protection lining.

10. Method as claimed in any preceding claim, wherein a portion of said adhesive is contained in the insulator (8).
